(19) **Europäisches Patentamt**

**European Patent Office**

**Office européen des brevets**

(11) Publication number: **0 226 668 B1**

(12) # EUROPEAN PATENT SPECIFICATION

(45) Date of publication of patent specification: **08.01.92**

(51) Int. Cl.⁵: **C08F 6/14**, C08F 8/22, C08J 3/00, //C08L27/18

(21) Application number: **85308139.6**

(22) Date of filing: **08.11.85**

The file contains technical information submitted after the application was filed and not included in this specification

(54) **Process for treating melt-processible Tetrafluoroethylene/perfluoro(alkyl vinyl)- ether copolymers.**

(43) Date of publication of application:
**01.07.87 Bulletin 87/27**

(45) Publication of the grant of the patent:
**08.01.92 Bulletin 92/02**

(84) Designated Contracting States:
**DE FR GB IT NL**

(56) References cited:
**EP-A- 0 073 121**
**GB-A- 1 210 794**
**GB-A- 1 591 541**
**US-A- 3 046 263**

(73) Proprietor: **E.I. DU PONT DE NEMOURS AND COMPANY**
**1007 Market Street**
**Wilmington Delaware 19898(US)**

(72) Inventor: **Buckmaster, Marlin Dwight**
**16 Ashwood Drive**
**Vienna, WV 26105(US)**
Inventor: **Foss, Ray Victor**
**8 Fairview Heights**
**Parkersburg, WV 26102(US)**
Inventor: **Morgan, Richard Alan**
**1013 27th Street, Apt. 3**
**Vienna, WV 26105(US)**

(74) Representative: **Myerscough, Philip Boyd et al**
**J.A.Kemp & Co. 14, South Square Gray's Inn**
**London, WC1R 5EU(GB)**

## Description

This invention relates to a process for preparing melt-processible tetrafluoroethylene copolymer granules having good particle flow characteristics and thermal stability. Such copolymers can be extruded onto wire or extruded into film or tubing, or used as a coating, or can be used in rotomolding applications to make hollow articles or linings.

Tetrafluoroethylene polymers are of two types. One is non-melt-processible polymers where the melt viscosity is too high to process the polymers by ordinary melt-extrusion processes. Instead, the polymers are ordinarily sintered or paste-extruded depending on the type polymer made. The other class is melt-processible tetrafluoroethylene copolymers having melt viscosities in the melt extrudable range.

Melt-processible tetrafluoroethylene (TFE) copolymer resins directly from the polymerizer and/or coagulator are referred to as fluff or powder. The fluff is normally humid heat treated and/or melt extruded to stabilize it, such as described in U.S. Patent 3,085,083. There are applications such as rotocasting in which a free-flowing powder (herein called "granules") is preferable to melt-extruded pellets or where a high degree of purity of the resin is desired. Although rotolining and rotocoating processes differ in several technical respects from rotomolding, for the sake of convenience the term "rotocasting" is used herein to refer to all three generically unless otherwise indicated.

To facilitate handling of such granules, it is desirable to improve particle characteristics. Melt-processible copolymers that are coagulated from an aqueous dispersion and dried are friable, and form fines easily which give poor handling properties. It would be desirable to provide a melt-processible copolymer that is both stable and easily handled in a minimum of processing steps. It is particularly desirable to provide a copolymer that could be used both in conventional melt-fabrication processes and in rotocasting applications where particle characteristics are important.

It is also desirable to obtain resins that are thermally stable. A number of stabilization approaches are known in the art, most of which require melting the resins. Thus resins stabilized by these methods are generally available only as pellets -- not (without tedious and expensive regrinding steps) as the free-flowing granules that are a desired result of this invention.

Another desirable feature of such resins is that the granules should be low in metal contamination. If the granules have been melted in traditional thermoplastic processing equipment, contamination occurs inevitably when the corrosive tetrafluoroethylene copolymer melts come in contact with the interior metal surfaces of thermoplastic processing equipment, even when corrosion-resistant alloys are used. Copolymers having low levels of metal contamination are particularily desirable for applications in the semiconductor industry.

GB-A-1210794 discloses chemically stabilising a solid high molecular weight fluorocarbon polymer containing unstable end groups by contacting the polymer, in the absence of oxygen, with a source of fluorine radicals to generate fluorine radicals and convert unstable end groups into stable end groups. GB-A-1591541 discloses the production of a copolymer of tetrafluoroethylene, 30 to 5 mole% of hexafluoropropene and 1 to 6 mole % of at least one fluoroalkylperfluorovinyl ether by copolymerisation in an aqueous medium in the presence of at least one chain-transfer agent.

The invention provides a process for treating a melt-processible, substantially nonelastomeric tetrafluoroethylene copolymer, which treatment comprises

A. coagulating from its aqueous polymerization medium a melt-processible tetrafluoroethylene copolymer comprising recurring units of tetrafluoroethylene and 0.4 to 4 mole per cent of at least one perfluoro(alkyl vinyl)ether, subject to the proviso that the copolymer does not contain 2 to 20 mole % of at least one perfluoroolefin of 3 to 8 carbon atoms, wherein coagulation is carried out by causing the copolymer and medium to form a viscous gel by mechanical agitation or alternatively by addition of a chemical gelation agent, after which the resulting gel is broken into granules by addition of an essentially water-immiscible liquid accompanied by mechanical agitation,

B. separating the coagulated copolymer from the aqueous medium,

C. removing liquid from the separated copolymer by drying,

D. hardening the dried copolymer by heating at a temperature between $25°$C below its differential scanning calorimeter melt onset temperature and its initial melt endotherm peak temperature until the attrition factor of the particles is less than 60, but before the copolymer becomes agglomerated, and

E. subjecting the hardened copolymer from D. to an atmosphere containing fluorine gas until the total number of unstable end groups is less than 80 per $10^6$ carbon atoms, and separating the copolymer from the atmosphere containing fluorine gas.

In step D. of this process the granules are heat treated to harden them, but not so as to completely melt or substantially deform them. The hardening facilitates screen sieving or mechanical screen sifting into desired particle sizes and facilitates handling by reason of reduced friability. The fluorination of the granules can remove color also.

The resulting granules are especially well suited for rotocasting applications because of the optimal particle size and free-flowing characteristics combined with low bubble tendency obtained in the process. A further benefit of the process is that such granules have not been melted in conventional thermoplastic processing equipment and are low in metal contamination.

The granules made by the process comprise a melt-processible, substantially nonelastomeric tetrafluoroethylene/perfluoro(alkyl vinyl)ether (PAVE) copolymer comprising recurring units of tetrafluoroethylene and 0.4 to 4 mole % (1 to 10 weight %) of PAVE, subject to the proviso that the copolymer does not contain 2 to 20 mole % of at least one perfluoroolefin of 3 to 8 carbon atoms, which copolymer has

(a) a melt viscosity between $1 \times 10^2$ and $1 \times 10^5$ Pas ($0.1 \times 10^4$ and $100 \times 10^4$ poise) at $372\degree$ C,

(b) a substantially spherical particle shape and a sphere factor less than 1.5,

(c) an attrition factor of less than 60,

(d) fewer than a total of 80 unstable end groups per $10^6$ carbon atoms, and

(e) an average particle size between 200 and 3000 micrometers.

Specific copolymerizable perfluoro(alkyl vinyl) ether comonomers include perfluoro(methyl vinyl ether), perfluoro(n-propyl vinyl ether), and perfluoro(n-heptyl vinyl ether), and mixtures thereof.

PAVE comonomer content is from 0.4 to 4 mole percent, and more than one such comonomer can be present.

The comonomer content is low enough that the copolymers are plastics rather than elastomers, i.e. they are partially crystalline and after extrusion do not exhibit a rapid retraction to original length from a stretched condition of 2X at room temperature.

The aqueous polymerization of TFE with various comonomers is well known. The reaction medium consists of water, monomers, a dispersing agent, a free-radical polymerization initiator, optionally, a chain-transfer agent and, optionally, a water-immiscible fluorocarbon phase, as described, for example, in U.S. Patent 3,635,926.

Polymerization temperatures between $20\degree$-$140\degree$ C may be employed and pressures of 1.4-7.0 MPa are ordinarily used. Generally higher temperatures and pressures are employed to increase polymerization rates, especially if a comonomer is less reactive relative to TFE. The TFE and sometimes the comonomer are fed continuously to the reaction vessel to maintain reaction pressure, or in some instances the comonomer is all added initially and pressure is maintained with TFE feed only. The monomer(s) are fed until the desired final dispersion solids level (15-50%) is achieved. The agitator speed in the reaction vessel may be held constant during polymerization or it may be varied to control polymerization rate.

Initiators commonly employed are free-radical initiators such as ammonium or potassium persulfate or disuccinic acid peroxide. The dispersing agent will be present in an amount between 0.01-0.5 percent based on weight of aqueous medium and preferably between 0.05-0.1 percent.

By the term "melt-processible" is meant that the copolymer can be processed (i.e., fabricated into shaped articles such as films, fibers, tubes, wire coatings and the like) by conventional melt-processing equipment. Such requires that the melt-viscosity of the copolymer at the processing temperature be no more than $10^6$ Pas ($10^7$ poise). Preferably it is in the range of $10^3$ to $10^5$ Pas ($10^4$ to $10^6$ poise) at $372\degree$ C.

Melt viscosities of the melt-processible polymers are measured according to American Society for Testing and Materials Method D-1238, modified as follows: The cylinder, orifice and piston tip are made of a corrosion-resistant alloy, such as Haynes Stellite(tm) 19 or Inconel(tm) 625. The 5.0 g sample is charged to the 9.53 mm inside diameter cylinder which is maintained at $372\degree$ C $\pm$ $1\degree$ C. Five minutes after the sample is charged to the cylinder, it is extruded through a 2.10 mm diameter, 8.00 mm long square-edge orifice under a load (piston plus weight) of 5000 grams. This corresponds to a shear stress of 44.8 kPa. The melt viscosity in 0.1 Pas (poises) is calculated as 53170 divided by the observed extrusion rate in grams per minute.

The copolymers prepared by the foregoing aqueous polymerization process are colloidally dispersed in the polymerization medium. The polymer 13 recovered from the dispersion by coagulation. Normal coagulation of aqueous polymer dispersions by mechanical shear tends to give a very finely divided powder which has poor handling characteristics. Several techniques might be used to obtain the preferred larger particle sizes. The combination of mechanical agitation and certain chemical additions can be used to obtain larger, spherical particles In the process of the invention, the aqueous dispersion is gelled with a gelling agent, preferably a mineral acid, while being agitated. Preferably nitric acid is used as the gelling agent. A water-immiscible liquid is then added to the gel while continuing the agitation. The gel breaks up into separate phases of water and liquid-wetted polymer particles. The particles are then dried. The granule size is a function of the dispersion particle size, the ratio of water-immiscible liquid to polymer, and the agitation conditions. The granule size is, as desired, much larger than that achieved if the dispersion is coagulated by mechanical shear action alone. Usually, the amount of water-immiscible liquid will be 0.25 to 3.0 part per part of polymer on a dry weight basis. About 0.1 to 10 parts of $HNO_3$ per 100 parts of polymer weight can be used. Nitric acid is preferred because it is not corrosive to stainless-steel equipment and readily volatilizes in a subsequent baking step. Coagulated particles obtained by this process generally have a size between 200-3000 micrometers. The product is separated, washed and dried at 80 to 150°C for from 4 to 30 hours.

Preferably, the water-immiscible liquid should have a surface tension of not more than $35 \times 10^{-3}$ N/m (35 dyne/cm) at 25°C and it should have a normal boiling point in the range of 30 to 150°C. Typical examples of the immiscible liquid usable in the invention are aliphatic hydrocarbons such as hexane, heptane, gasoline and kerosene, or mixtures thereof, aromatic hydrocarbons such as benzene, toluene and xylene, halogenated derivatives such as carbon tetrachloride, monochlorobenzene, the trichlorotrifluoroethanes, difluorotetrachloroethanes, and liquid oligomers of chlorotrifluoroethylene.

The dried particles are generally spherical and have a sphere factor less than 1.5, and preferably less than 1.2. The sphere factor is a measure of the degree of roundness of the particles. A sphere factor of 1 represents a geometrically spherical particle.

The particles are then hardened by heat treatment until the attrition factor, as described herein, is less than 60 and preferably less than 25, but before the granules agglomerate.

By the term "before the granules agglomerate" is meant that the D50 as hereinafter defined does not increase by more than 20%.

Heat hardening of the granules formed in the coagulation step occurs relatively close to the copolymer melting point. The temperature at which hardening occurs depends not only on the copolymer melting point but also on other characteristics such as comonomer and molecular weight distributions. These characteristics influence the temperature at which the onset of melting occurs.

This heat-hardening phenomenon occurs when the copolymer granules are held at a temperature within the range between the copolymer melting point and a temperature 25°C below the melt onset temperature, as measured by differential scanning calorimetric (DSC) methods described herein. The granules must be exposed to temperatures within this range for a time sufficient to impart a useful degree of hardness. The resulting heat-hardened granules are not completely melted and are only partially sintered. If the melting heat ratio as hereinafter defined is below 1.2, the polymer granules have been melted and begin to fuse together. After heat hardening, the granules have a level of hardness useful in preventing attrition and fines generation during subsequent steps in the manufacturing process and also in melt fabrication.

The manufacturing process for the granules may optionally include sizing, such as screen granulation to mechanically force all the granules through a screen of selected mesh size which breaks up the oversize particles while maintaining the useful particle characteristics described herein. Some lump formation occurs during heat hardening and fluorination. Such screen granulation is efficient in removing these lumps, which are detrimental in rotocasting operations.

These particles may contain unstable end groups. The end groups found in the untreated polymer directly from polymerization depend on the initiator used and on the presence of pH and molecular weight modifiers. For example, if ammonium or potassium persulphate is employed as the initiator, the polymer end groups are essentially all carboxylic acid ($-CO_2H$). The acid end groups are found in both monomeric or dimeric forms. If a pH modifier such as ammonium hydroxide is present, then a large portion of the carboxylic acid ends may be converted to amide ends ($-CONH_2$). If a molecular weight modifier such as methanol is employed, then a portion of the ends may be carbinol ($-CH_2OH$) as well as the more stable difluoromethyl ends ($-CF_2H$). The presence of methanol can also lead to methyl ester ends ($-CO_2CH_3$). Vinyl ends ($-CF=CF_2$) are generally not a direct result of polymerization but are formed as a result of decarboxylation of the initially formed carboxylic acid ends. Acid fluoride ends ($-COF$) generally result from air oxidation of the vinyl ends or the carbinol ends. All of the end groups described above (except $-CF_2H$) are considered to be thermally and/or hydrolytically unstable. This is what is meant by the term "unstable end groups". They have a tendency to cause bubbles or voids upon melt fabrication. These voids can be detrimental to the physical or electrical properties of fabricated articles. It is desirable to have less than 80 of these unstable ends per $10^6$ carbon atoms in the polymer.

The number of unstable end groups described above is reduced by treatment of the polymer with fluorine gas until the total number of unstable end groups is less that 80 per $10^6$ carbon atoms. Since reactions with fluorine are very exothermic, it is preferred to dilute the fluorine with an inert gas such as nitrogen. The level of fluorine in the fluorine/inert gas mixture may be 1 to 50 volume % but is preferably 10-30%. Any reaction temperature between 0°C and the polymer melting point may be used but a temperature range between 130 and 200° C appears to be practical to permit reasonable reaction times (1 to 5 hours under fluorine). It is preferred to agitate the polymer to expose new surfaces continuously. The gas pressure during fluorination may range from atmospheric to 1 MPa. If an atmospheric pressure reactor is used, it is convenient to pass the fluorine/inert gas mixture through the reactor continuously. After exposure of the polymer for the desired length of time, the excess fluorine is purged from the sampled, which is then cooled.

Most of the unstable end groups are converted to perfluoromethyl ($-CF_3$) ends by the fluorine.

The preferred copolymers should have a melting heat ratio greater than 1.2. By melting heat ratio is meant the ratio of the heat of melting on its first melting to the heat of melting recorded on a second melting. This is an indication that the particles have not been melted completely.

## TEST PROCEDURES

### BUBBLE INDEX

The bubble index test referred to in the examples is performed as follows: A 15g sample of copolymer is weighed into a new clean aluminum pan which is about 50mm in diameter, 16mm deep and 0.08mm thick. The sample (with controls for comparison) is baked at 50±5° C above the melting point for 40 minutes in a high-temperature recirculating air oven. The baking time is defined as specimen exposure time between closing and opening the oven door. The oven air temperature is preset and recovers to set temperature within 5 to 10 minutes after sample addition. After cooling to room temperature, the polymer specimen is removed from the pan. The degree of bubble formation is observable qualitatively and is measure by the percentage increase in specific volume of the specimen relative to the bubble-free polymer. The Bubble Index is defined as:

$$\text{Bubble Index} = \left[\left(\frac{(A - W)\,G}{A}\right) - 1\right] 100$$

where:

G = Specific Gravity of bubble-free copolymer as determined by ASTM Method D-792.

A = Net weight of specimen in air.

W = Net weight of specimen in water by displacement method.

The entire exposed Bubble Index specimen is weighed in air and under water to the nearest 0.01 gram on an electronic balance. To obtain the net weight submerged in water, a stainless-steel wire harness with depth mark is suspended from a small ring stand on the balance and the tare weight of the harness is set to null in water before the specimen is added to the harness and submerged to the fixed depth. About 800 ml of demineralized water containing one drop of Triton(tm) X-100 or X-500 surfactant is used for submersion at room temperature. Specimens are observed under water to insure constant immersion depth and the absence of bubbles on the specimen surface.

### ATTRITION FACTOR

Particle hardness is measured by a screening test as follows:

Equipment:

Fritsch Pulverisette(tm), Model 24-0217-000 (TeKmar Company, Cincinnati, OH)

Sieve (USA Standard Testing Sieves)

- 51mm high x 203mm dia x 30 mesh for granules of D50 greater than 700 micrometers.
- 51mm high x 203mm dia x 80 mesh for granules of D50 less than 700 micrometers.

Pan and dome lid, 203mm dia.

19mm diameter stainless-steel balls (32g each)

Procedure:

Place 100.0 g of polymer ($W_s$) onto the screen which has been placed on the preweighed pan ($W_o$). Place the dome lid on top and position in the Fritsch Pulverisette(tm) apparatus. Preset amplitude to 1.5mm (amplitude setting of 3).

Attach the retaining straps to the lid and tighten securely. Set the timer for 10 min and activate. At the

5

end of 10 min remove the lid and screen, brushing polymer adhering to the inside of the bottom rim of the screen into the pan. Weigh the pan ($W_1$). Place 12 of the stainless-steel balls on the screen and reassemble pan/screen/lid and place in the Pulverisette(tm). Set timer for 10 min and activate and adjust the amplitude to 1.5 mm. After 10 min disassemble the screen again brushing polymer adhering to the inside of bottom rim into the pan. Weigh the pan and contents again ($W_2$). Calculate attrition factor as follows:

$$\text{Attrition Factor} = \left[ \frac{W_2 - W_1}{W_s - (W_1 - W_0)} \right] 100$$

## DETERMINATION OF SPHERE FACTOR

A small amount of sample is placed on a glass microscope slide, dispersed into a single layer by shaking slightly, and then photomicrographed. On a print, the largest and shortest diameters (a and b) of each particle are accurately measured to within ± 5% using more than 30 particles selected at random.

The sphere factor is calculated according to the method of U.S. Patent No. 3,911,072 as follows: (n = number of particles measured)

$$\text{Sphere Factor} = \frac{1}{n} \sum_{i=1,n} \frac{a_i}{b_i} \quad (i = 1,2,3,\ldots,n)$$

## END GROUP ANALYSIS

The end groups in a fluorocarbon polymer are determined from the infrared spectrum of compression molded films. This technique has been described in previous patents such as U.S. Patent 3,085,083.

The quantitative measurement of the number of end groups is obtained using the absorptivities measured on model compounds containing the end groups of interest. The end groups of concern, the wavelengths involved, and the calibration factors determined from model compounds are shown below:

| Endgroup | Wavelength, micrometers | Calibration Factor (CF) |
|---|---|---|
| -COF | 5.31 | 406 |
| -$CO_2H$(M) | 5.52 | 335 |
| -$CO_2H$(D) | 5.64 | 320 |
| -$CO_2CH_3$ | 5.57 | 368 |
| -$CONH_2$ | 2.91 | 914 |
| -$CF=CF_2$ | 5.57 | 635 |
| -$CH_2OH$ | 2.75 | 2220 |

M = Monomeric,
D = Dimeric

The calibration factor is a mathematical conversion to give end group values in terms of ends per $10^6$ carbon atoms. The concentration of each type of end in a polymer film may generally be obtained from this equation:

$$\text{End Groups per } 10^6 \text{ carbon atoms} = \frac{\text{absorbance X CF}}{\text{film thickness}}$$

where film thickness is in millimeters.

Some of the absorbance peaks may interfere with one another when $-CO_2H(D)$, $-CO_2H(M)$, and $-CF=CF_2$ ends are all present. Corrections have been developed for the absorbances of $-CO_2H(D)$ (hydrogen-bonded carboxylic acid dimer) and the $-CF=CF_2$ ends. These are as follows (where u is wavelength in micrometers):

$$\frac{\text{absorbance } 5.46u - (0.3 \times \text{absorbance } 5.58u)}{0.91} = \text{corrected absorbance for } -CO_2H(D)$$

$$\frac{\text{absorbance } 5.57u - (0.3 \times \text{absorbance } 5.58u)}{0.91} = \text{corrected absorbance for } -CF=CF_2$$

The presence of $-CONH_2$ or $-CO_2CH_3$ may also interfere with the acid and $-CF=CF_2$ absorbances. Since these groups are generally the result of additives to polymerization their presence is generally predictable. A suspicion of $-CONH_2$ absorbance in the vicinity of 5.6 micrometers can be checked by searching for the auxiliary $-CONH_2$ band at 2.91 micrometers.

The polymer films (0.25 to 0.30mm thick) are scanned on a Perkin-Elmer 283B spectrophotometer with a film of the same thickness, and known to contain none of the ends under analysis, in the instrument reference beam. The instrument is set up with a Response Time setting of 1, a Scan Time setting of 12 minutes, Ordinate Expansion of 2, a Slit Program of 7, and an Auto-Chek Gain control of 20%. The films are then scanned through the pertinent regions of the spectrum making sure that adequate base lines are established on each side of the pertinent absorbances.

The polymer films are generally compression molded at 270-350°C. The presence of certain salts, particularly alkali metal salts, may cause end group degradation within this temperature range. If these salts are present, the films should be molded at the lowest possible temperature.

## PERFLUOROPROPYLVINYL ETHER (PPVE) CONTENT DETERMINATION

The PPVE content in the melt-processible TFE/PPVE copolymers described herein is also determined by infrared spectroscopy. The ratio of absorbance at 10.07 micrometers to that at 4.25 micrometers is determined under a nitrogen atmosphere using films approximately 0.05 mm thick. The films are compression molded at 350°C, then immediately quenched in ice water. This absorbance ratio is then used to determine percent PPVE by means of a calibration curve established with reference films of known PPVE content. F19 NMR is used as the primary standard for calibrating the reference films.

## AVERAGE PARTICLE SIZE

U.S. Patent 3,929,721 describes a dry-sieve analysis procedure. The "average particle size" is determined by a dry-sieving procedure in accordance with ASTM Procedure D-1457-81a (12.3.3) modified as follows. The 203mm diameter sieve set is assembled in order, with the largest mesh opening on top. From the listing of U.S.A. Standard Testing Sieve sizes (ASTM E-11 Specification), four to eight adjacent sieves are selected with openings between the limits of 6 mesh and 200 mesh and which bracket the range into which the average particle size is expected to fall.

A 40 to 60g representative portion of the sample to be tested, preferably obtained using a sample splitter and weighed to the nearest 0.01g, is charged to the top screen. The screen set is shaken in a sieve shaker (typically a "Ro-Tap(tm)" shaker obtained from Fisher Scientific Co., Cat. No. 4-909) for about 10 minutes. After shaking, the net weight of material retained on each sieve is determined to the nearest 0.01g.

The weight average particle size is determined based on plotting the cumulative percentage retained vs. sieve opening on log-probability paper as described in ASTM method D-1921-63, or by equivalent computer interpolation of these data. The average particle size in micrometers is read from the plot at the 50th percentile (D50) abscissa of cumulative weight percentage retained.

## DSC ANALYSIS

DSC analyses are carried out with a Du Pont Model 1090 Thermal Analyzer using a Model 910 DSC cell base and the Du Pont General Analysis Program, version 1.0. The instrument is calibrated as recommended by the manufacturer, using a 10mg indium standard. Polymer sample size is 6 to 10 mg, crimped into an aluminium capsule. Different heating and cooling cycles are used depending upon the melting point of the sample. Samples are scanned twice across the melting endotherm at $10°C$ per minute from a temperature which is $90 \pm 5°C$ below to a temperature $40 \pm 5°C$ above the melting endotherm peak temperature. Between the first and second scanning of the endotherm, the sample is cooled from the maximum to the minimum scan temperature at a rate of $10°C/min$. The "melting endotherm peak temperature" is defined as the peak temperature of the first melting endotherm. The heats of melting ($H_1$ and $H_2$) are calculated from the first and second melting scans, respectively. The "melting heat ratio" (Hm ratio) is defined as $H_1/H_2$. The melting heats $H_1$ and $H_2$ are determined by instrumental integration using a base line from $80°C$ below to $30°C$ above the peak temperature. The "melt onset temperature" is determined graphically by plotting the derivative of the first melting scan using the Du Pont General Analysis Program, Version 1.0. It is defined as the temperature where the expanded derivative curve first increases above the zero base line (on the low temperature edge of the melting curve) by 0.2 mW/min.

## Example 1

An aqueous dispersion of tetrafluoroethylene (TFE) with 1.3 mole % perfluoropropyl vinyl ether (PPVE) copolymer was prepared in accordance with U.S. Patent 3,635,926. This dispersion, containing 26.9 weight % copolymer, was obtained by polymerizing the monomers using ammonium persulfate initiator, ammonium perfluorocaprylate surfactant and ethane chain-transfer agent in the presence of ammonium hydroxide pH modifier and Freon(tm) 113 as a water-immiscible phase.

The above TFE/PPVE copolymer dispersion was coagulated at $35°C$ by adding, with agitation, 5.8 parts of 60 weight % nitric acid and 85.5 parts of Freon(tm) 113 per 100 parts by weight of copolymer (dry basis).

The resulting granules were washed , with agitation, 3 times with $20-25°C$ demineralized water, followed by a wash heated to $60°C$ to remove the Freon(tm) 113, and by a final water wash at $20-40°C$. The resulting polymer was separated from the wash water and dried at $180°C$ for 6 hours in a circulating air oven. The soft granules were characterized as follows.

Average Particle Size (D50) = 360 micrometers
Attrition Factor = 81.8
Sphere Factor = 1.18
Melt Viscosity = $3.9 \times 10^4$ poise at $372°C$
PPVE Comonomer Content = 1.3 mole %
Melting Heat Ratio = 1.53
Melting Endotherm Peak Temperature = $311°C$
Melt Onset Temperature = $287°C$
Bubble Index = 26

The infrared scan showed 93 amide ends per $10^6$ carbon atoms and a few vinyl and/or carboxylic acid ends per $10^6$ carbon atoms.

The resin was heat hardened at about $285°C$ for three hours and the granules screened through a 20-mesh screen. They were characterized as follows.

Average Particle Size (D50) = 340 micrometers
Attrition Factor = 3.1
Melt Viscosity = $7.9 \times 10^4$ poise at $372°C$
PPVE Comonomer Content = 1.3 mole %
Melting Heat Ratio = 1.59
Melting Endotherm Peak Temperature = $311°C$
Melt Onset Temperature = $289°C$
Bubble Index = 66

The much reduced attrition factor shows a marked improvement in the hardness of the granules. Infrared analysis showed 88 amide ends and a few vinyl or carboxylic acid ends per $10^6$ carbon atoms.

The resin was fluorinated using a high-pressure stainless-steel cylindrical batch reactor, equipped with gas and vacuum connections, electric heaters and shaker-type agitation. Polymer granules were charged and the vessel was sealed. A vacuum was applied followed by pressurization to 1 MPa gauge pressure with a mixture of fluorine/nitrogen (25%/75% by volume) at $190°C$. The total processing time including start-up, venting and cool-down was just over 5 hours. The granules were heated in a circulating air oven for over an hour to remove traces of fluorine. Particle integrity was preserved. The granules were characterized as follows. Average Particle Size (D50) = 285 micrometers
Attrition Factor = 6.3
Melt Viscosity = 7.5 x $10^4$ poise at 372°C
Melting Heat Ratio = 1.60
Melting Endotherm Peak Temperature = 311°C
Melt Onset Temperature = 291°C
Bubble Index = 15

Infrared analysis showed that fewer than 50 unstable end groups per $10^6$ carbon atoms were present after fluorination.

Example 2

By a procedure similar to that of Example 1, a heat-hardened resin was obtained. The granules were fluorinated as follows: An amount of polymer granules corresponding to about one-fourth of the reactor capacity was sealed inside the reactor of Example 1 and fluorinated for four hours at 185°C to 189°C using a reactor rotation speed of 5 rpm. After fluorination, the granules were reduced in size by forcing them through a U.S. 30-mesh, 203-mm diameter sieve on a Fritsch Pulverisette(tm) shaker. Twelve stainless-steel balls 19mm in diameter were placed on the screen and vibrated until all the material, except for 3.6% of very hard particles which were discarded, had been forced through the screen.

The granulated resin was characterized as follows.
Average Particle Size (D50) = 337 micrometers
Attrition Factor = 4.1
Sphere Factor = 1.13
Melt Viscosity = 8.0 x $10^4$ poise at 372°C
PPVE Comonomer Content = 1.2 mole %
Melting Heat Ratio = 1.56
Melting Endotherm Peak Temperature = 311°C
Melt Onset Temperature = 289°C

Infrared analysis indicated few detectable unstable end groups.

The Bubble Index on this sample was 11, compared to 45 for a non-heat-hardened, unfluorinated control sample.

A comparison was made of the rotolining performance of heat-hardened, fluorinated granules and unfluorinated control granules, using a 3-inch flanged pipe tee as a mold. A 647g quantity of the resin was placed inside the mold. The mold was then mounted in a fixture on one of the arms of the spider of a McNeil-Akron rotocasting machine of the type described in U.S. Patent No. 4,312,961. The machine was indexed to advance the arm into the oven. The mold was rotated by the fixture about mutually perpendicular axes to cause the resin to tumble and contact all interior surfaces of the mold. The major/minor axis speeds were 8/9 rpm respectively. The mold and its contents were heated for 15 minutes at 329°C before the temperature was raised to 352°C for the processing times shown below.

On completing the heating cycle, the spider arm indexed to a cooling station. While continuing its rotation, the part was cooled in sequence by an air stream for 5 minutes, by a water spray for 12 minutes, and again by air for 2 minutes.

The rotocasting machine was then indexed to bring the finished part to the unloading station where it was removed. The lining of the finished part was inspected for bubbles or other porosity. The fluorinated resin of this invention gave a smoother surface than the control as shown in the table below.

| Heat-Processing Conditions | Resin Type | Rotomolded Part Observations |
|---|---|---|
| 110 min, 352°C | Fluorinated | Bubble-free |
| 110 min, 352°C | Unfluorinated | Many small lumps; bubbles in side neck |
| 80 min, 352°C | Fluorinated | Bubble-free |
| 80 min, 352°C | Unfluorinated | Many small lumps throughout part; many bubbles in middle of wall |

**Claims**

1. A process for treating a melt-processible, substantially nonelastomeric tetrafluoroethylene copolymer, which treatment comprises

A. coagulating from its aqueous polymerization medium a melt-processible tetrafluoroethylene copolymer comprising recurring units of tetrafluoroethylene and 0.4 to 4 mole % of at least one perfluoro(alkyl vinyl) ether, subject to the proviso that the copolymer does not contain 2 to 20 mole % of at least one perfluoroolefin of 3 to 8 carbon atoms, wherein coagulation is carried out by causing the copolymer and medium to form a viscous gel by mechanical agitation or alternatively by addition of a chemical gelation agent, after which the resulting gel is broken into granules by addition of an essentially water-immiscible liquid accompanied by mechanical agitation,

B. separating the coagulated copolymer from the aqueous medium,

C. removing liquid from the separated copolymer by drying,

D. hardening the dried copolymer by heating at a temperature between 25°C below its differential scanning calorimeter melt onset temperature and its intial melt endotherm peak temperature until the attrition factor of the particles is less than 60, but before the copolymer becomes agglomerated, and

E. subjecting the hardened copolymer from D. to an atmosphere containing fluorine gas until the total number of unstable end groups is less than 80 per $10^6$ carbon atoms, and separating the copolymer from the atmosphere containing fluorine gas.

2. A process according to claim 1 wherein at least one mineral acid is used as chemical gelation agent in A.

3. A process according to claim 2 wherein the chemical gelation agent is nitric acid.

**Revendications**

1. Un procédé de traitement d'un copolymère de tétrafluoréthylène sensiblement non élastomère, façonnable à l'état fondu, lequel traitement consiste à

A. coaguler à partir de son milieu aqueux de polymérisation un copolymère de tétrafluoréthylène façonnable à l'état fondu comprenant des motifs récurrents de tétrafluoréthylène et 0,4 à 4 moles % d'au moins un éther perfluoré d'alkyle et de vinyle, avec la condition que le copolymère ne contiennent pas 2 à 20 moles % d'au moins une oléfine perfluorée de 3 à 8 atomes de carbone, la coagulation étant effectuée en amenant le copolymère et le milieu à former un gel visqueux par agitation mécanique ou, en variante, par addition d'un agent gélifiant chimique, après quoi le gel résultant est dissocié en granulés par addition d'un liquide essentiellement non miscible à l'eau conjointement à une agitation mécanique,

B. séparer le copolymère coagulé du milieu aqueux,

C. éliminer par séchage le liquide du copolymère séparé,

D. faire durcir le copolymère séché par chauffage à une température comprise entre une température inférieure de 25°C à sa température de début de fusion au calorimètre différentiel à balayage et sa température de pic endothermique de fusion initial jusqu'à ce que le facteur d'attrition des particules soit inférieur à 60, mais avant que le copolymère ne s'agglomère, et

E. exposer le copolymère durci provenant de D. à une atmosphère contenant du fluor gazeux jusqu'à ce que le nombre total de groupes terminaux instables soit inférieur à 80 pour $10^6$ atomes de carbone, et séparer le copolymère de l'atmosphère contenant le fluor gazeux.

2. Un procédé selon la revendication 1, dans lequel on utilise au moins un acide minéral comme agent gélifiant chimique en A.

3. Un procédé selon la revendication 2, dans lequel l'agent gélifiant chimique est l'acide nitrique.

**Patentansprüche**

1. Verfahren zur Behandlung eines schmelzverarbeitbaren, im wesentlichen nichtelastomeren Tetrafluorethylencopolymer, bei dem

A. ein schmelzverarbeitbares Tetrafluorethylencopolymer mit wiederkehrenden Einheiten von Tetrafluorethylen und 0,4 bis 4 Mol% mindestens eines Perfluor(alkylvinyl)ethers mit der Massgabe, dass das Copolymer nicht 2 bis 20 Mol% von mindestens einem Perfluorolefin von 3 bis 8 C-Atomen enthält, aus seinem wässrigen Polymerisationsmedium koaguliert wird, wobei die Koagulation ausgeführt wird, indem das Copolymer und das Medium durch mechanisches Rühren oder alternativ durch Zusatz eines chemischen Gelierungsmittels ein viskoses Gel bildet, wonach das entstandene Gel durch Zusatz einer im wesentlichen wassernichtmischbaren Flüssigkeit, begleitet von mechanischem Rühren, in Granulen gebrochen wird,

B. das koagulierte Copolymer von dem wässrigen Medium abgetrennt wird,

C. Flüssigkeit vom abgetrennten Copolymer durch Trocknen entfernt wird,

D. das getrocknete Copolymer gehärtet wird, indem man es auf eine Temperatur zwischen 25°C unterhalb seiner Differential Scanning Calorimeter-Anfangstemperatur und der Peaktemperatur seiner anfänglichen Schmelzendotherme erhitzt, bis der Abriebfaktor der Teilchen weniger als 60 beträgt, aber bevor das Copolymer agglomeriert.

2.  Verfahren nach Anspruch 1, bei dem mindestens eine Mineralsäure als chemisches Gelierungsmittel in A verwendet wird.

3.  Verfahren nach Anspruch 2, bei dem das chemische Gelierungsmittel Salpetersäure ist.